# EUROPEAN PATENT APPLICATION

(11) **EP 4 404 449 A1**
(43) Date of publication of application: **24.07.2024**
(21) Application number: 23152902.5
(22) Date of filing: 23.01.2023
(51) Int. Cl.: H02M 1/00, H02M 1/12, H02M 1/44, H02M 7/537, H02M 7/797

(54) **A METHOD FOR OPERATING AN INVERTER DEVICE, A COMPUTER PROGRAM PRODUCT, A COMPUTER-READABLE STORAGE MEDIUM AS WELL AS AN INVERTER DEVICE**

(71) Applicant: Siemens Aktiengesellschaft, 80333 München (DE)
(72) Inventor: Hänsel, Stefan, 91080 Spardorf (DE)
(74) Representative: Siemens Patent Attorneys

(57) **Abstract**

The invention relates to a method for operating an inverter device (10), comprising the steps of generating a first control signal (20) for controlling a switching process (22) of the inverter device (10) by a first electronic computing device (14); transmitting the first control signal (14) to a second electronic computing device (16), wherein the second electronic computing device (16) is configured for generating a second control signal (24) for controlling an active filter element (18) of the inverter device (10); and generating the second control signal (24) depending on the first control signal (20) by the second electronic computing device (16). Furthermore, the invention relates to a computer program product, a computer-readable storage medium as well as to an inverter device (10).

## Description

The invention relates to a method for operating an inverter device. Furthermore, the invention relates to a computer program product, a computer-readable storage medium as well as an inverter device.

When operating inverters or power supply units, interference is generated by switching power semiconductors of the inverter device. These interferences can affect other devices connected to the same means. Since the interference can lead to operational disturbances, the permissible interference levels are limited in various standards that deal with electromagnetic compatibility (EMC). A distinction is made between interference emission, the interference spreads through the air as an electromagnetic wave, and conducted emission, wherein the interference spreads through the cables connected to the unit.

Up to now, mainly passive filters have been used to reduce the conducted emission. This consists of inductors, capacitors, and partly resistors. In order to comply with the limit values, 2-stage-filters are often necessary, in which the inductors must carry the entire load current and provide sufficient damping, which makes them large and heavy. The filters are especially adapted to the switching behavior of the units, which makes their design complex and does not allow subsequent modification of the units' behavior.

By introducing an actively controlled voltage or current source at the connection point of the inverter to the means, it is theoretically possible to set any attenuation behavior of the filter. This type of filtering is known as "active filtering" or "active EMI filter", as a signal is impressed into the system in the opposite direction to the interference, and though does actively suppress the interference. Previous approaches only consider common mode or differential mode interference, which is detected by analogue circuits and immediately counter coupled.

It is an object of the invention to provide a method, a computer program product, a computer-readable storage medium as well as an inverter device, which can reduce interference in a three-phase grid.

This object is solved by a method, a computer program product, a computer-readable storage medium as well as an inverter device according to the independent claims. Advantageous embodiments are presented in the dependent claims.

One aspect of the invention relates to a method for operating an inverter device. A first control signal for controlling a switching process of the inverter device by a first electronic computing device is generated. The first control signal is transmitted to a second electronic computing device, wherein the second electronic computing device is configured for generating a second control signal for controlling an active filter element of the inverter device. The second control signal is generated depending on the first control signal by the second electronic computing device.

Therefore, in order to transfer the inverter device to a three phase AC system, an active filtering is provided, wherein the active filtering takes into consideration the first control signal. Therefore, it is provided measuring points to detect the remaining interference, a digital signal processing unit, and a coupling network, which includes analogue digital conversion.

In order to couple the synthetic negative feedback signal to the system, the coupling network is required.

Furthermore, the digital signal processing, in other words the first electronic computing device and the second electronic computing device, is provided, wherein the task of this digital signal processing is to predict the system behavior and to calculate corresponding negative feedback signals so that the disturbance is compensated as completely as possible. There are many ways to calculate the negative feedback signal. The range from simple feed forward control to adaptive filters and machine learning-based methods.

The digital signal processing is basically divided into two areas. The real-time capable area, which has to calculate new negative feedback signals very quickly, for example higher than 100 MHz, an transmit them to the second electronic computing device. Here, synchronization with the inverter control plays a very important role. For example, FPGAs or ASICs are particularly suitable here. For the second area, it is recommended to use a very powerful computing unit. This area is responsible for optimizing the system description. The optimization does not have to be carried out in real time, but it requires considerably more computing power than the calculation of the negative feedback signals. Thus, for example CPUs are of particular interest here.

In order to comply with the real-time capability of the system, it is advantageous that the first electronic computing device may transmit the future switching state of for example the FPGA's of the inverter device to the second electronic computing device. Therefore, the second electronic computing device is able to adapt the second control signal early, in order to comply with the real-time capability.

Therefore, active filtering offers many degrees of freedom compared to passive filtering. Filters no longer have to be optimized for each inverter, the filter can adapt itself to the given grid configuration, the losses of the filter can be calculated and optimized online. The size of the filter can be reduced and thus the dimensions of the inverter system. According to an embodiment, the inverter device is provided as a three-phase inverter. Therefore, the inverter device may be configured for generating AC-power for a grid, for example from a DC load. For example, the inverter may be configured as a solar grid inverter or a wind turbine inverter. Furthermore, the inverter device may be configured for inverting AC current into DC current, wherein, for example, the DC load may be an electrical motor. In particular, the electric motor may be a three-phase motor. Therefore, the inverter device may be used in a highly flexible way.

According to another embodiment, the inverter device is provided as a bidirectional inverter. In particular, the inverter device may be configured for invert AC-power into DC-power or vice versa, DC-power into AC-power. Therefore, the inverter device is highly flexible.

In another embodiment, the active filter element is provided with at least one capacity for filtering. The capacitive version, the coupling network consists of three capacitors, each connected to one phase. A controllable voltage source may be connected to these, which in turn is connected to earth potential. To limit the current flowing from the inverter to the active filter, a decoupling choke may also be necessary.

According to another embodiment, the active filter element is provided with at least one inductivity for filtering. In the inductive version, the active filter is integrated into the filter choke. For this purpose, an additional winding per phase is applied to the filter choke, into which the negative feedback signal is impressed. By coupling the windings, the interference can thus be counteracted. The center of the three voltage sources can optionally be earthed. It is also possible for each voltage source to have its own electrical return of the signal.

The controlled voltage sources each consists of a high-position and fast digital analogue converter (DAC), and optionally an amplifier stage. This may be a part of the active filter element. The system requirements depend on the overall system. Since the EMC standard covers a frequency range of 9 kHz to 30 MHz, it makes sense to achieve a comparable band width with the DAC inclusive amplifier. The sampling rate of the DAC should therefore be higher than 100 MHz. To achieve the necessary accuracy, a resolution of at least 40 bits is recommended. The amplifier stages can be analogue amplifier circuits, for example from the class A to C, or a switching amplifier, for example from place D to G, or a combination of both.

In another embodiment, the first electronic computing device and the second electronic computing device are provided in the same housing. In particular, the electric connections between the first electronic computing device and the second electronic computing device are held short in order to get signals without loss of energy and time and for fast transmission of the control signals. Therefore, both controls can be implemented in the same controller. An implementation in the same controller is generally recommended, as here an absolute synchronization of the two controls can be achieved, which is necessary for a high-frequency regulation of the disturbances.

In another embodiment, additionally for generating the second control signal an electrical parameter of a three-phase-grid, which is connected to the inverter device, is taken into consideration. In particular, therefore measuring points for measuring the disturbance are provided. Information about the system is necessary to calculate the negative feedback signals. This can be obtained by various methods. The simplest constellation is that the entire system is measured at a certain point in time in a special setup, the behavior of the system is analyzed, and the system behavior is transferred to the real-time capable control, which can thus calculate the negative feedback signals at any point in time. Since the negative feedback signals depend on the actual switching actions of the inverter device, synchronization of the control of the active filter and the inverter control is also necessary. Since this concept requires a very precise measurement and description of the system, this is usually not sufficient to comply with the EMC standards. For this reason, it is advisable to provide additional measuring points with which the remaining interference can be measured. In particular, a grid connection point may be a measuring point.

With these measurements, the control system receives information on how well the cancellation of the disturbances works and can react to changes in the system behavior and adapt the stored model. A measurement by means of current sensors is possible, but it is advisable to use a voltage measurement, since with this a better accuracy can be achieved in the target frequency range and the standard it defines a disturbance voltage and not a disturbance current. Therefore, according to an embodiment a current as the electrical parameter is taken into consideration and/or a voltage as the electrical parameter is taken into consideration.

In another embodiment, additionally for generating a second control signal, an electrical parameter of a three-phase input at the inverter device is taken into consideration. Furthermore, additionally for generating the second control signal, an electrical parameter of a DC-load at the inverter device is taken into consideration. In another embodiment, additionally for generating the second control signal a generated power of the inverter device and/or a temperature of the inverter device is taken into consideration. Therefore, it is also advisable to measure the disturbances introduced by the inverter device. The disturbance introduced can vary greatly depending on operating status of the inverter device. In particular, the inverter transmitting power, temperature and the level of the DC link voltage, which may be the DC load, can significantly influence the behavior. Furthermore, the disturbances can change over lifetime of the inverter. Here, too, it is advisable to measure the disturbances with a voltage measurement. It is not necessary to implement a separate measuring channel for each measurement, but it is conceivable that only two measuring channels are set up which are then switched back and forth between the individual measuring points. One possible procedure is to measure the introduced disturbance in phase 1 and the remaining disturbance in phase 1 simultaneously, perform the necessary calculation and then switch to phase 2 or phase 3 and repeat the process. Another approach may be that the common mode or differential mode voltages can be measured directly. This is possible by obtaining differential voltages or some voltages from the different measuring points or by introducing a measuring point at the center of the DC link.

The measuring points each consists of a matching network that divides the measured variable to a well-processable measuring range, for example from 600 Volts to 3 Volts and an analogue-digital conversion (ADC). The requirements for the matching network and the analogue-digital conversion are that a bandwidth of 9 kHz to 30 MHz and a very good resolution of a few tens of microvolts are achieved. The resolution of DC voltages is not absolutely necessary.

In particular, the method is computer-implemented method. Therefore, another aspect of the invention relates to a computer program product comprising program code means for performing a method. The computer program product may also be regarded as a computer program.

A still further aspect of the invention relates to a computer-readable storage medium. The computer-readable storage medium may be, for example, a non-transitory computer-readable storage medium.

A still further aspect of the invention relates to an inverter device, wherein the inverter device comprises at least a first electronic computing device, a second electronic computing device and an active filter element, wherein the inverter device is configured for performing a method according to the preceding aspect. In particular, the method is performed by the inverter device.

The first electronic computing device and/or the second electronic computing device may comprise electronic means, for example processors, circuits, in particular integrated circuits, and further electronic means for performing a method according to the preceding aspect.

Independent of the grammatical term usage, individuals with male, female or other gender identities are included within the term.

Further features of the invention result from the claims, the figures and the figure description. The features and combinations of features mentioned above in the description, as well as the features and combinations of features mentioned below in the figure description and/or shown alone in the figures, can be used not only in the combination indicated in each case, but also in other combinations without departing from the scope of the invention.

The invention will now be explained in more detail with reference to preferred examples of embodiments and with reference to the accompanying drawings.
- FIG 1: a schematic block diagram according to an embodiment of an inverter device;
- FIG 2: another schematic block diagram according to another embodiment of an inverter device;
- FIG 3: another schematic block diagram according to an embodiment of an inverter device; and
- FIG 4: another schematic block diagram according to an embodiment of the inverter device.

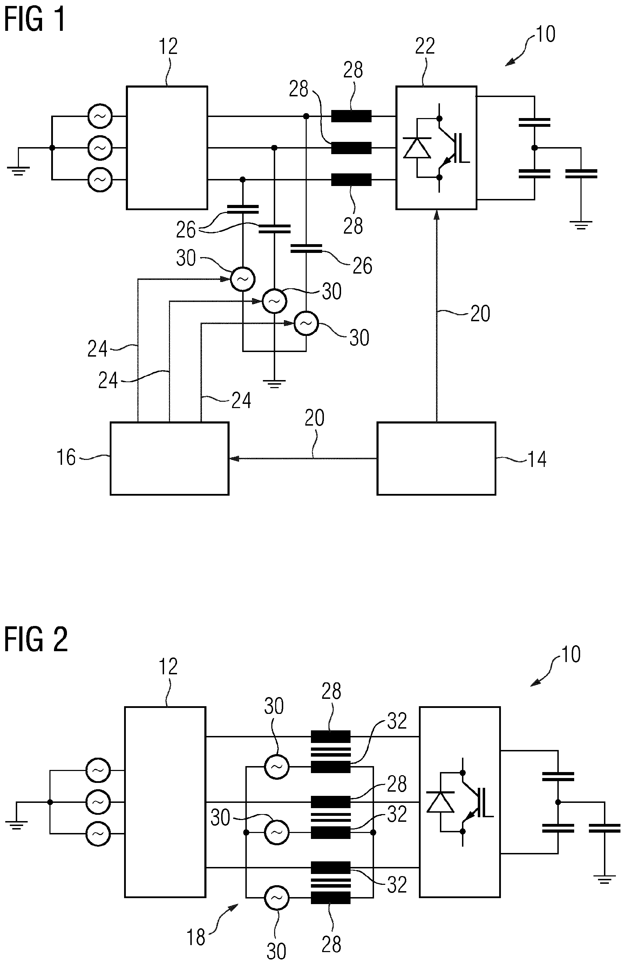

FIG 1 shows a schematic block diagram according to an embodiment of an inverter device 10. The inverter device 10 is in particular configured to be connected to a tree-phase-grid 12. According to an embodiment of the inverter device 10, the inverter device 10 comprises at least a first electronic computing device 14, a second electronic computing device 16 and an active filter element 18.

According to an embodiment for operating the inverter device 10, a first control signal 20 for controlling a switching process 22 of the inverter device 10 is provided by the first electronic computing device 14. The first control signal 20 is transmitted to the second electronic computing device 16, wherein the second electronic computing device 16 is configured for generating a second control signal 24 for controlling the active filter element 18. The second control signal 24 is generated depending on the first control signal 20 by the second electronic computing device 16.

In particular, it is shown that the inverter device 10 is a three-phase inverter. Furthermore, the inverter device 10 is provided as a bidirectional inverter.

Furthermore, FIG 1 shows that the active filter element 18 is provided with at least one capacity 26 for filtering. Furthermore, FIG 1 shows that in each phase an inductivity 28 is provided.

FIG 1 shows in order to transfer a known approach to a three-phase AC system, the three components are essentially required as well. The measuring points to detect the remaining interference, the digital signal processing unit, which may be the first electronic computing device 14 and the second electronic computing device 16, the coupling network and the analogue-digital conversion.

In order to couple the synthetic negative feedback signal into the system, a coupling network is required. This can be, as shown in FIG 1, a capacitive network. In the capacitive version, the coupling network consists of the three capacitors 26, each connected to one phase. A controllable voltage source 30 is connected to these, which in turn is connected to earth potential. To limit the current flowing from the inverter device 10 into the active filter element 18, a decoupling choke is also necessary, wherein the decoupling choke is shown with the inductivities 28.

FIG 2 shows another schematic block diagram according to an embodiment of the invention. According to the shown embodiment, the active filter element 18 comprises further inductivities 32. In the inductive version according to FIG 2, the active filter element 18 is integrated into the filter choke. For this purpose, an additional winding per phase is applied to the filter choke, into which a negative feedback signal is impressed. By coupling the windings, the interference can thus be counteracted.

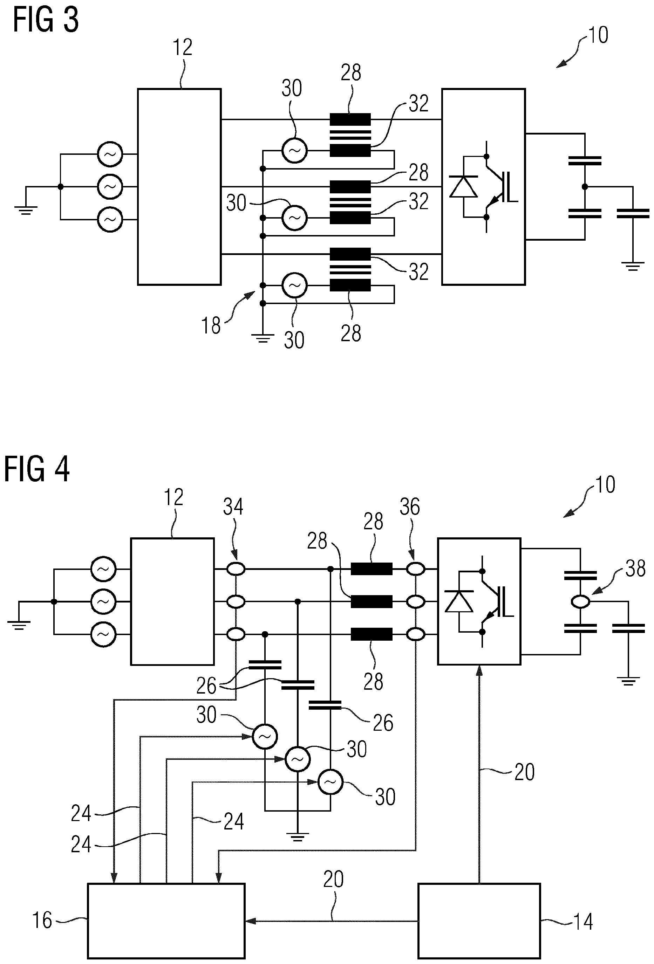

FIG 3 shows another block diagram according to the embodiment of FIG 2, wherein in FIG 3 the center of the three voltage sources 30 can optionally be earthed. It is also possible for each voltage source 30 to have its own electrical return of the signal. The control voltage source 30 each consists of a high-position and fast DAC (digital analogue converter), and optionally an amplifier stage. The system requirements depend on the overall system. Since the EMC standard covers a frequency range of 9 kHz to 30 MHz, it makes sense to achieve a comparable band width of the DAC inclusive amplifier. The sampling rate of the DAC should therefore be higher than 100 MHz. To achieve the necessary accuracy, a resolution of at least 40 bits is recommended.

The amplifier stages can be analogue amplifier circuits, for example class A to C, or switching amplifiers, for example from place D to G, or a combination of both.

FIG 4 shows another schematic block diagram according to an embodiment of the invention. FIG 4 shows measuring points 34, 36, 38 for measuring their disturbance. The information about the system is necessary to calculate the negative feedback signals. This can be obtained by various methods.

The simplest constellation is that the entire system is measured at a certain point in time in a special setup, the behavior of the system is analyzed, and the system behavior is transferred to the real-time capable control, which can thus calculate the negative feedback signals at any point in time. Since the negative feedback signals depend on the actual switching actions of the inverter device 10, synchronization of the control of the active filter element 18 and the inverter controls is also necessary. Optionally, both electronic computing devices 14, 16 can be implemented in the same controller/housing. An implementation in the same controller is generally recommended, as here an absolute synchronization of the two controls can be achieved, which is necessary for a high-frequency regulation of the disturbances. Since this concept requires a very precise measurement and description of the system, it is usually not sufficient to comply with the EMC standards. For this reason, it is advisable to provide additional measuring points 34, 36, 38 with which the remaining interference can be measured. This is possible either by voltage or current measurement, for example at a grid connection point 34. With these measurements, the control system receives information how well the cancellation of the disturbances works and can react to changes on the system behavior and adapt the stored model. A measurement by means of current sensors is possible, but it is advisable to use a voltage measurement, since with this a better accuracy can be achieved in the target frequency range and the standard it defines a disturbance voltage and not a disturbance current.

It is also advisable to measure the disturbances introduced by the inverter at a three-phase input 36 at the inverter device 10. The disturbances introduced can vary greatly depending on operating status of the inverter device 10. In particular, the inverter transmitting power, temperature and the level of a DC load 38, which may also be regarded as a DC link voltage, can significantly influence the behavior. Furthermore, the disturbances can change over lifetime of the inverter device 10. Here, too, it is advisable to measure the disturbances with a voltage measurement.

It is not necessarily necessary to implement a separate measuring channel for each measurement, but it is conceivable that only two measuring channels are set up, which are then switched back and forth between the individual measuring points. One possible procedure is to measure the introduced disturbance in phase 1 and the remaining disturbance in phase 1 simultaneously, perform the necessary calculation and then switch to phase 2 or phase 3 and repeat the process.

Another approach may be that the common mode or differential mode voltages can be measured directly. This is possible by obtaining differential voltages or some voltages from the different measuring points or by introducing a measuring point at the center of the DC link, in particular at the DC load 38.

The measuring points 34, 36, 38 each consists of a matching network that divides the measured variable to a well-processable measuring range, for example from 600 Volts to 3 Volts and an analogue-digital conversion (ADC). The requirements for the matching network and the analogue-digital conversion are that a bandwidth of 9 kHz to 30 MHz and a very good resolution of a few tens of microvolt are achieved. The resolution of DC voltages is not absolutely necessary.

The task of the digital signal processing, in particular of the first electronic computing device 14 and the second electronic computing device 16, is to predict the system behavior and to calculate corresponding negative feedback signals, in particular the second control signal 24 so that the disturbance is compensated as completely as possible. There are many ways to calculate the negative feedback signal. The range from simple feed forward control to adaptive filters and machine learning-based methods may be used.

Digital signal-processing is basically divided into two areas. The real-time capable area, which may be the first electronic computing device 14, which has to calculate new negative feedback signals very quickly, for example higher than 100 MHz, an transmit them to the second electronic computing device 16. Here, synchronization with the inverter control plays a very important role. FPGAs or ASICs are particularly suitable here. For the second area, which may be the second electronic computing device 16, it is recommended to use a very powerful computing unit. This area is responsible for optimizing the system description. The optimization does not have to be carried out in real time, but it requires considerably more computing power than the calculation of the negative feedback signals. Thus, for example CPUs are of particular interest here.

### Reference signs

- 10: inverter device
- 12: three-phase grid
- 14: first electronic computing device
- 16: second electronic computing device
- 18: active filter element
- 20: first control signal
- 22: switching process
- 24: second control signal
- 26: capacity
- 28: inductivity
- 30: voltage source
- 32: inductivity
- 34: grid connection point
- 36: three-phase input
- 38: DC-load

## Claims

1. A method for operating an inverter device (10), comprising the steps of:
- generating a first control signal (20) for controlling a switching process (22) of the inverter device (10) by a first electronic computing device (14);
- transmitting the first control signal (14) to a second electronic computing device (16), wherein the second electronic computing device (16) is configured for generating a second control signal (24) for controlling an active filter element (18) of the inverter device (10); and
- generating the second control signal (24) depending on the first control signal (20) by the second electronic computing device (16).

2. The method according to claim 1, wherein the inverter device (10) is provided as a three-phase inverter.

3. The method according to claims 1 or 2, wherein the inverter device (10) is provided as a bidirectional inverter.

4. The method according to any of claims 1 to 3, wherein the active filter element (18) is provided with at least one capacity (26) for filtering.

5. The method according to any of claims 1 to 3, wherein the active filter element (18) is provided with at least one inductivity (32) for filtering.

6. The method according to any of claims 1 to 5, wherein the first electronic computing device (14) and the second electronic computing device (16) are provided in the same housing.

7. The method according to any of claims 1 to 6, wherein additionally for generating the second control signal (24) an electrical parameter of a three-phase-grid (12), which is connected to the inverter device (10), is taken into consideration.

8. The method according to claim 7, wherein a current as the electrical parameter is taken into consideration.

9. The method according to claim 7 or 8, wherein a voltage as the electrical parameter is taken into consideration.

10. The method according to any of claims 1 to 9, wherein additionally for generating the second control signal (24) an electrical parameter of a three-phase input (36) at the inverter device (10) is taken into consideration.

11. The method according to any of claims 1 to 10, wherein additionally for generating the second control signal (24) an electrical parameter of a DC-load (38) at the inverter device (10) is taken into consideration.

12. The method according to any of claims 1 to 11, wherein additionally for generating the second control signal (24) a generated power of the inverter device (10) and/or a temperature of the inverter device (10) is taken into consideration.

13. A computer program product with program code means for performing a method according to any of claims 1 to 12.

14. A computer-readable storage medium comprising at least the computer program product according to claim 13.

15. An inverter device (10), comprising at least a first electronic computing device (14), a second electronic computing device (16), and an active filter element (18), wherein the inverter device (10) is configured for performing a method according to any of claims 1 to 12.
